# EUROPEAN PATENT APPLICATION

(11) **EP 2 247 077 A1**
(43) Date of publication of application: **03.11.2010**
(21) Application number: 09305281.9
(22) Date of filing: 03.04.2009
(51) Int. Cl.: H04L 29/08

(54) **Method and apparatus for network communications**

(71) Applicant: Hewlett-Packard Development Company, L.P., Houston, TX 77070 (US)
(72) Inventor: Bertin, Olivier, 06901, Sophia-Antipolis (FR); Caradec, Jean-Philippe, 38053, Grenoble Cedex 09 (FR); Mansutti, David, 06901, Sophia-Antipolis (FR)
(74) Representative: Franks, Adam Peter

(57) **Abstract**

According to an embodiment of the present invention there is provided a method of facilitating the execution of a remote procedure call on a first network device (102), the first network device (102) not being directly addressable from the network. The method comprises: receiving, at a connection manager (122), from the first network device (102), a first request message to establish a connection with the first network device (102), the request message including an identifier; establishing a first connection with the first network device (102) and the connection manager (122), the first connection being associated with the identifier; receiving, at an interface module (124), a second request message from a second network device (114) to execute a remote procedure call on the first network device (102), the second request message including the identifier; establishing a second connection with the interface module (124) and the connection manager (122); associating, the first connection with the second connection; and forwarding the received request to the first network device (102) over the first connection.

## Description

### BACKGROUND

Increasing numbers of communication devices, such as personal computers, laptop computers, personal digital assistants, mobile telephones, smartphones, and the like, are able to connect to the Internet.

At the same time, an ever increasing myriad of web-based applications are being developed for such devices, providing ever greater functionality for users. Some of that functionality may be provided through the use of web services.

A web service is designed to provide specific functionality, and is made available on an Internet-connected computer. The interface provided to access the functionality may be defined, for example, using the web services description language (WSDL). WSDL is an XML-based language that provides a model for describing web services. Messages and events to interact with the provided functionality are encapsulated using SOAP and are sent to the web interface using HTTP.

One way in which web services may be used is to provide a remote procedure call (RPC) framework. Using RPC enables, for example, a remote device, such as an Internet-connected mobile telephone, smartphone, laptop or desktop computer, or the like, to remotely execute functionality of the web service and receive response messages back from the web service.

However, since web services are largely HTTP based, the asymmetrical request-response nature of HTTP only permits RPC calls from being made from a remote web services client on a user device to a network-based web services server. Although it is possible to have a web services server on a remote device to serve requests from a network-based web services client, the majority of user devices are generally unable to receive HTTP requests from the Internet since user devices are typically allocated private IP addresses and may connect to the Internet through a firewall.

### BRIEF DESCRIPTION

Embodiments of the invention will now be described, by way of non-limiting example only, with reference to the accompanying drawings, in which:
Figure 1 is a block diagram showing a communication system according to one embodiment of the present invention;
Figure 2 is a flow diagram showing example processing steps taken by an element of the communication system according to an embodiment of the present invention;
Figure 3 is a flow diagram showing example processing steps taken by an element of the communication system according to an embodiment of the present invention;
Figure 4 is a flow diagram showing example processing steps taken by an element of the communication system according to an embodiment of the present invention;
Figure 5 is a flow diagram showing example processing steps taken by an element of the communication system according to an embodiment of the present invention; and
Figure 6 is a flow diagram showing example processing steps taken by an element of the communication system according to an embodiment of the present invention.

### DETAILED DESCRIPTION

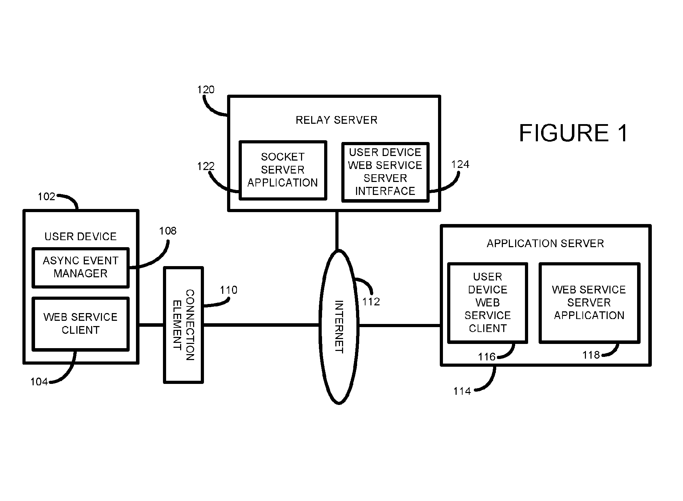

Referring now to Figure 1 there is shown a block diagram of a communication system according to one embodiment of the present invention.

A user computing device 102 is connected to the Internet 112 through an appropriate connection element 110. The user device 102 is allocated an IP address through the connection element 110.

For example, where the user device 102 is a laptop computer, the connection element 110 may be local ADSL modem/router. Where the user device 102 is a mobile device, the connection element may be, for example, a gateway GPRS support node (GGSN) of a mobile network. The connection element 110 allocates a private IP address to the mobile device in any appropriate manner, such as through use of the dynamic host configuration protocol (DHCP).

In the present embodiment the user device 102 includes a HTTP web service client application 104 used for sending HTTP requests to, and for receiving HTTP responses from, a HTTP web service server application 118. The server application 118, which runs on a web services computer server 114, responds to HTTP requests from the web service client application 104 with appropriate HTTP responses.

The web interface of the web service server application 118 is defined using a WDSL description. Using this WDSL description the web service client application 104 may formulate appropriate HTTP request messages to cause a remote function of the web service server application 118 to be executed. The web service server application 118 may send a message in response to the execution of the remote function to the web service client application 104 using a suitably formulated HTTP response message.

Advantageously, the present embodiments also enable the web service server application to execute remote procedure calls on the user device 102, as will be described further below.

The ability to make remote procedure calls on a user device opens up a whole new range of services that may be provided to users. For example, in an emergency situation, a web service server application can execute a remote procedure call on a user device to request and obtain the physical location of that user device. In other examples, a health monitoring system on the user device could be remotely invoked to send details of heart rate, blood pressure, or video images etc, back to an emergency worker.

Currently, such solutions rely on a user device regularly sending location information to a location server. Advantageously, moving to such a 'pull' model can lead to a significant reduction in network traffic, as well as reduced use of user device resources. These aspects are particularly important in mobile communications where user device processing resources, network bandwidth and power supplies may be limited. Furthermore, the problems associated with user devices having a private IP address or being behind a firewall are also overcome.

The user device 102 has an asynchronous event manager 108, which may be implemented, for example, as a suitable software application executing on the user device 102. The asynchronous event manager 108 is used for receiving asynchronous messages, such as remote procedure calls or other events, sent from the user device web service client 116, as will be described in further detail below.

The asynchronous messages are sent through a relay server computer 120 connected to the Internet 112. The relay server has a connection manager or socket server application 122 and an interface module such as user device web service server interface 124. The user device web service server interface 124 defines the web service interface of the user device 102. This enables the user device web service interface to be accessible through the relay server 120, even though the user device itself may have a private IP address and may not be directly accessible via the Internet. The web service interface is defined by a WSDL description.

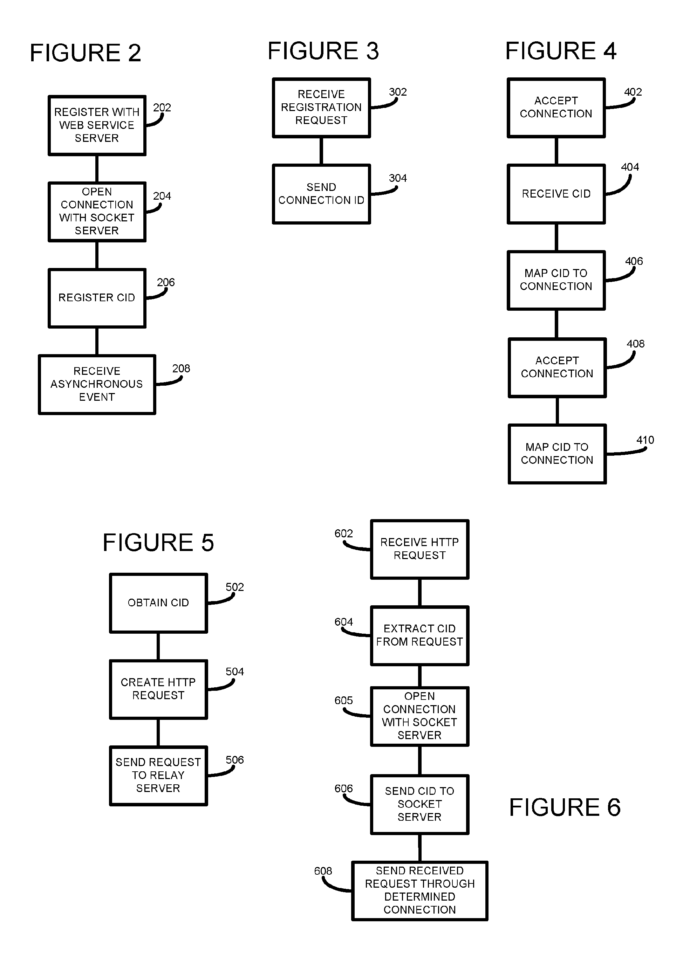

Further reference will now be made to Figures 2, 3, 4, 5, and 6, which are flow diagrams outlining example processing steps that may be taken by the user device 102, the web service server application 118, socket server application 122, user device web service client 116, and the user device web server interface 124 respectively.

The web service client application 104 initially logs in (step 202) to the web service server application 118 by sending a remote procedure call to execute a 'login' method on the web service server application 118. As previously mentioned, the remote procedure call is encapsulated in a SOAP message and sent in a HTTP request message to the web service server application 118. The remote procedure call message may additionally include a user name and password provided by the user of the user device 102.

An example web service RPC message is shown below:

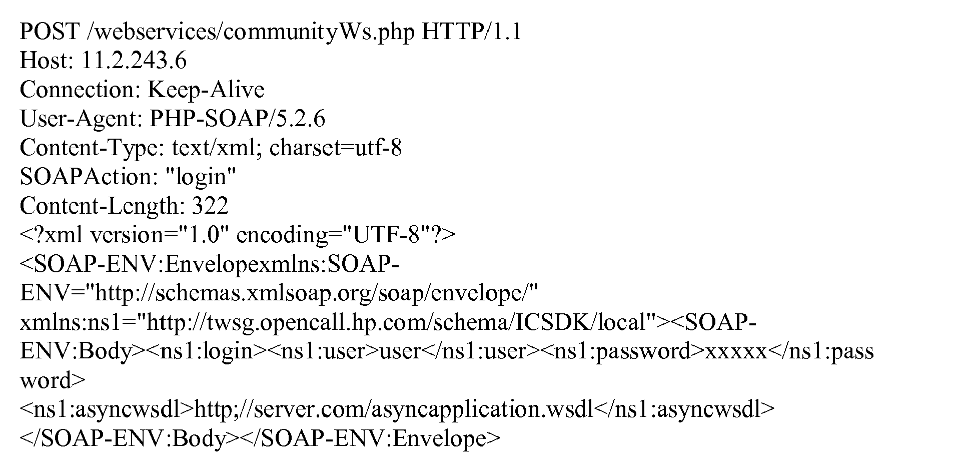

The web service server application 118 receives (step 302) the remote procedure call and executes the 'login' method using the supplied user ID and password. If login is successful, for instance if the provided user ID and password are authenticated, the web service server application generates a connection identifier (CID) that it sends (step 304) to the web service client application 104 in a suitable HTTP response message. An example message is shown below:

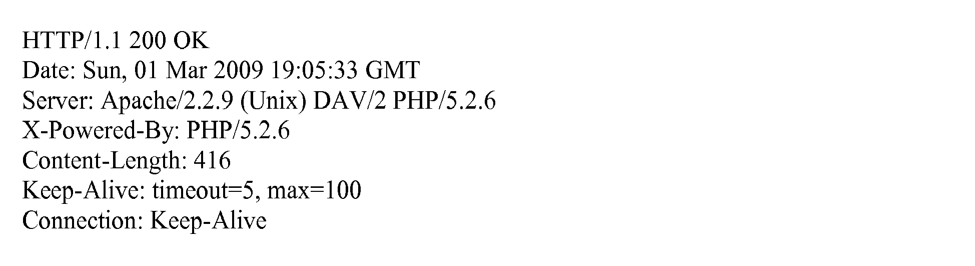

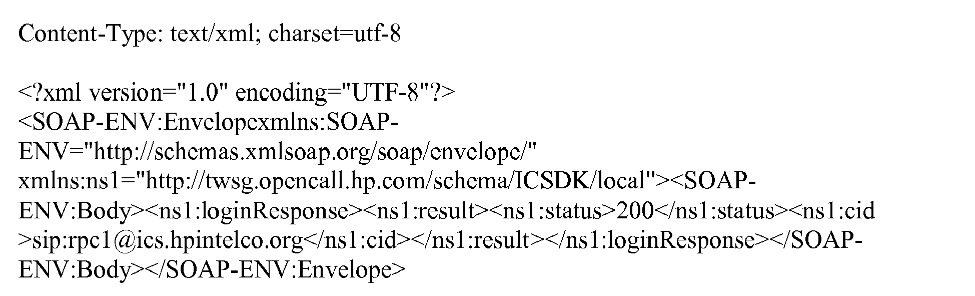

The web service client application 104 receives the response message and the CID is extracted therefrom, and is passed to the asynchronous event manager 108. The asynchronous event manager 108 then opens (step 204) a TCP connection with the socket server application 122 which the socket server application 122 accepts (step 402). The IP address of the socket server application 122 is pre-configured in the asynchronous event manager 108 in any appropriate manner, for example, as a DNS name or as a fixed IP address.

Through the opened connection the asynchronous event manager 108 sends a registration request (step 206) to the socket server application 122 which receives it at step 404. The registration request includes the CID previously supplied by the web service server application 118 and sends information informing the socket server 122 that the registration request is coming from a user device.

The socket server application 122 maps or associates (step 406) the received CID with the identifiers of the opened connection with the user device 102. This mapping may be stored, for example, in an appropriate memory or database. In the current embodiment the network connection is a TCP socket being identified by a source and destination pair of IP address and TCP port number.

Since the opened socket is associated with a user device the socket sever application 122 ensures that the connection with the user device is maintained until the user device logs out. This thus enables the user device 102 to receive RPC requests at any time. Depending on the type of connection used, the asynchronous event manager 108 may send periodic 'keep alive' messages or traffic over the connection to prevent the connection from being closed due to lack of activity.

For the user device web service client 116 to execute a remote procedure call on the user device 102 it first obtains (step 502) the connection ID (CID) it previously allocated to the user device 102. Using the WDSL description of the web server interface 124 it formulates (step 504) an appropriate RPC web service request identifying the remote procedure call to be executed on the user device 102. The RPC web server request includes the CID allocated to the user device 102.

The RPC web service request is encapsulated using SOAP and is sent (step 506) using HTTP to the user device web server interface 124 of the relay server 120.

An example message is:

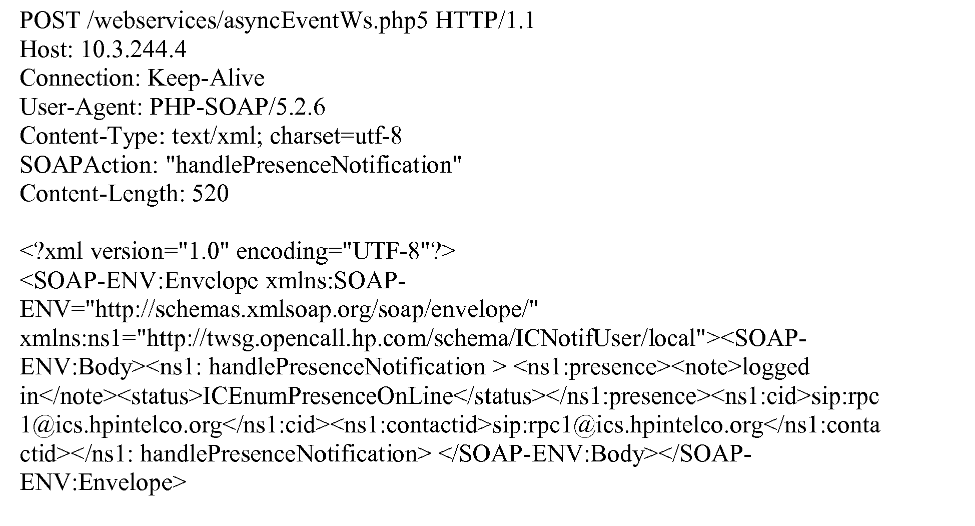

The user device web server interface 124 receives the HTTP request (step 602) and extracts (step 604) the CID therefrom. The user device web service interface 124 then opens (steps 605 and 408) a connection to the socket server 122, identifies itself as an RPC requestor and sends (step 606) the CID to the socket server 122.

By identifying itself as an RPC requestor the socket server is configured to only keep the connection open with the user device web service interface 124 until a response or confirmation that the RPC has been successfully executed has been received.

Once the connection is opened, the socket server application 122 maps (step 410) the CID to newly opened connection, and now has two open connections (i.e. one with the user device 102 and one with the user device web server interface 124) associated with the same CID. The socket server application 122 may then relay any incoming data on one of the open connections to the other associated connection.

For example, when the user device web server interface 124 receives a web service RPC request it decodes it, serializes it, and sends it over the associated connection, through the socket server application 122, to the user device 102. An example message is shown below:

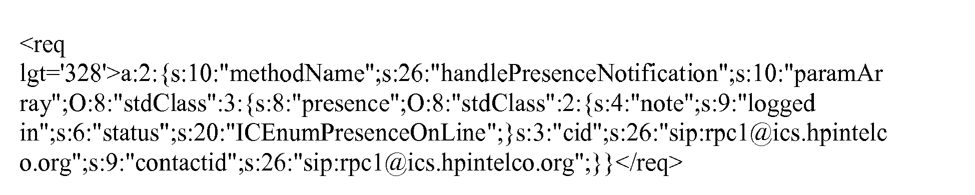

The asynchronous event manager 108 receives (step 208) the RCP request and processes it accordingly, for example by executing the method or function call specified in the received remote procedure call.

If the method called has to send a response message back, a response message is created and serialized, and is sent over the open connection to the socket server 122. As described above, the socket server then relays the response message to the user device web server interface 124 which unserializes the message and formats the response in accordance with the WSDL description of the web service response. The connection on which the socket server forwards the response message is determined as being the connection associated with the connection through which the response message was received. In an alternative embodiment, the response message may include the CID to identify on which connection to forward the response message.

An example message is shown below:

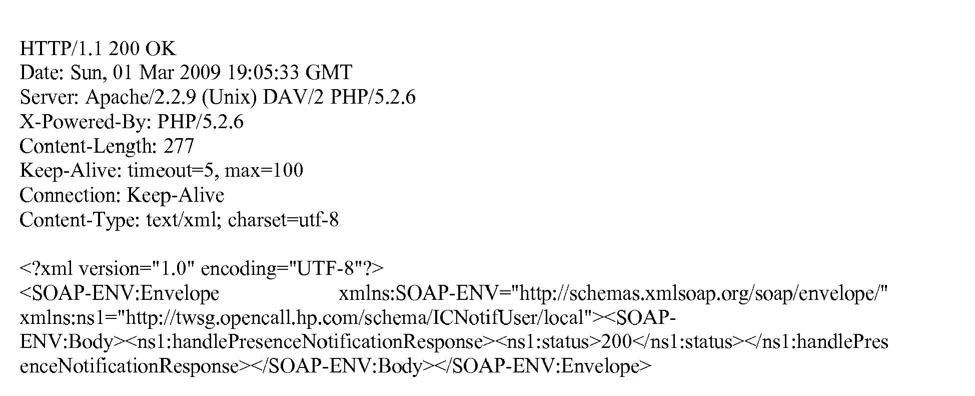

By having the user device 102 open a connection to the relay server the present embodiments thus provide an efficient mechanism for sending asynchronous messages from the application server 114 to the user device 102, thereby overcoming problems caused by the user device having a private IP address or being behind a firewall.

It will be appreciated that embodiments of the present invention can be realized in the form of hardware, software or a combination of hardware and software. Any such software may be stored in the form of volatile or nonvolatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments.

The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A method of facilitating the execution of a remote procedure call on a first network device, the first network device not being directly addressable from the network, comprising:
receiving, at a connection manager, from the first network device, a first request message to establish a connection with the first network device, the request message including an identifier;
establishing a first connection with the first network device and the connection manager, the first connection being associated with the identifier;
receiving, at an interface module, a second request message from a second network device to execute a remote procedure call on the first network device, the second request message including the identifier;
establishing a second connection with the interface module and the connection manager;
associating, the first connection with the second connection; and
forwarding the received request to the first network device over the first connection.

2. The method of claim 1, further comprising:
receiving over the first connection a response message;
determining the second connection associated with the first connection; and
forwarding the response message over the determined second connection.

3. The method of claim 1 or 2, wherein the first network device has a private Internet protocol address.

4. The method of claim 1, 2, or 3, wherein the interface module has an interface described using the web services description language, or WSDL, the WDSL description describing a web interface of the first network device.

5. The method of claim 4, wherein the step of receiving the second request message further comprises receiving, from an application server running on the second network device, a HTTP request message comprising a SOAP encapsulated remote procedure call request message formatted in accordance with the WDSL description.

6. The method of any of claims 1 to 5, further comprising decoding the received message, serializing the received remote procedure call request message and forwarding the serialized message over the first connection.

7. The method of any of claims 2 to 6, wherein the step of receiving the response message comprises receiving a serialized response message, the method further comprising un-serializing the message, formatting the message in accordance with a WSDL description of the second network device, and forwarding the formatted message over the associated second connection.

8. Apparatus for facilitating the execution of a remote procedure call on a first network device, the first network device not being directly addressable from the network, comprising:
a connection manager to receive, from the first network device, a request to establish a connection with the first network device, the request including an identifier, the connection manager being arranged to establish a first connection with the first network, and to associate the first connection with the identifier;
an interface module to receive, from a second network device, a request to execute a remote procedure call on the first network device, the request message including the identifier;
the connection manager being further arranged to establish a second connection with the interface module and to associate the first and second connections;
the connection manager being further arranged to forward the received request to the first network device over the first connection.

9. The apparatus of claim 8, the connection manager being further arranged to:
receive, over the first connection, a response message;
determine the second connection associated with the first connection; and
forward the response message over the determined second connection.

10. The apparatus of claims 8 or 9, wherein the first network device has a private Internet protocol address.

11. The apparatus of claims 8, 9, or 10, wherein the interface module has an interface described using the web services description language, or WSDL, the WDSL description describing a web interface of the first network device.

12. The apparatus of claim 11, wherein the interface module is arranged to receive, from an application server running on the second network device, a HTTP request message comprising a SOAP encapsulated remote procedure call request message formatted in accordance with the WDSL description.

13. The apparatus of any of claims 8 to 12, the interface module arranged to:
decode the received message;
serialize the received remote procedure call request message; and
forward the serialized message over the second connection for further forwarding by the connection manager over the first connection.

14. The apparatus of any of claims 8 to 13, wherein the connection manager is further adapted to:
receive the response message comprises receiving a serialized response message;
un-serializing the message;
format the message in accordance with a WSDL description of the second network device; and forward the formatted message over the associated second connection.

15. A first network device operable for use with the apparatus of any of claims 8 to 14.
